# EUROPEAN PATENT APPLICATION

(11) **EP 3 763 616 A1**
(43) Date of publication of application: **13.01.2021**
(21) Application number: 19186050.1
(22) Date of filing: 12.07.2019
(51) Int. Cl.: B63B 21/00

(54) **A SYSTEM FOR CHARGING A BATTERY OF AN ELECTRICALLY DRIVEN SHIP**

(71) Applicant: Damen 40 B.V., 4200 AA Gorinchem (NL)
(72) Inventor: Van Dongen, Frank, 3022 NL Rotterdam (NL); Van Boven, Johan, 8081 NH Elburg (NL); Zoet, Klaas, 8355 BS Giethoorn (NL)
(74) Representative: De Vries & Metman

(57) **Abstract**

A system for charging a battery of an electrically driven ship comprises a ship (1) including a battery for providing electrical energy to a propulsion device of the ship, a mooring station (2) including an electrical source, cooperating electrical contact locations at the ship and the electrical source for transferring electrical energy from the electrical source to the battery when the electrical contact locations contact each other and cooperating mechanical contact locations (4, 5) at the ship and the mooring station which contact each other when the ship is moored at the mooring station. The system comprises a pulling device (6) for pulling the ship and the mooring station against each other when the ship is moored at the mooring station, wherein the pulling device has cooperating parts (7, 8) at the ship and the mooring station which are located at a distance from the mechanical contact locations.

## Description

The present invention relates to a system for charging a battery of an electrically driven ship, comprising a ship including a battery for providing electrical energy to a propulsion device of the ship, a mooring station including an electrical source, cooperating electrical contact locations at the ship and the electrical source for transferring electrical energy from the electrical source to the battery when the electrical contact locations contact each other, cooperating mechanical contact locations at the ship and the mooring station which contact each other when the ship is moored at the mooring station.

Such a system is known from CN 207523896. The known system comprises an unmanned ship including a battery and a floating platform including an electrical source. The battery can be loaded when the unmanned ship is moored at the floating platform. The unmanned vessel is provided with a charging plug and the floating platform is provided with a flexible arm including a conical guide port for receiving the charging plug. The flexible arm can move with the ship. A disadvantage of the known system is that it is sensitive to damage in case of relatively large movements of the ship caused by high waves.

An object of the invention is to provide a robust system for charging a battery of an electrically driven ship.

This object is accomplished with the system according to the invention, which comprises a pulling device for pulling the ship and the mooring station against each other when the ship is moored at the mooring station, wherein the pulling device has cooperating parts at the ship and the mooring station which are located at a distance from the mechanical contact locations.

When the ship is moored at the mooring station the cooperating mechanical contact locations at the ship and the mooring station contact each other. The pulling device creates a friction force between the ship and the mooring station when pulling them to each other, hence keeping the ship and the mooring station in an engaged condition such that the ship and the mooring station have a substantially fixed position with respect to each other at the cooperating mechanical contact locations. This provides the opportunity to safely couple the cooperating electrical contact locations to each other when the ship is moored at the mooring station, in particular when the electrical contact locations are located close to the mechanical contact locations. Besides, when a gangway for boarding and deboarding passengers is located close to the mechanical contact locations a stable structure is created when activating the pulling device. Furthermore, the pulling device obviates the use of the propulsion device of the ship for keeping the ship against the mooring station during charging the battery, hence saving electrical energy.

The system according to the invention can be applied for a ferry service in a harbour, for example, where several electrically driven ships follow routes along different mooring stations. The system provides the opportunity to charge the batteries of the ships at one or more mooring stations during relatively short periods, for example during periods for boarding and deboarding passengers.

In an advantageous embodiment the cooperating mechanical contact locations comprise two contact surfaces at the ship which lie at a distance from each other as seen from above and two contact surfaces at the mooring station which cooperate with the respective contact surfaces at the ship, wherein the cooperating parts of the pulling device are located between the contact surfaces of the ship and between the contact surfaces of the mooring station, since this creates a stable mooring condition.

The cooperating parts of the pulling device may comprise a hook which is movably mounted to one of the ship and the mooring station, and a bar which is mounted to the other one of the ship and the mooring station, wherein the hook and the bar are engageable to each other.

Preferably, the one of the ship and the mooring station has a conical receiver for receiving the bar upon mooring, whereas the bar is fixed to a frame which is movably mounted to the other one of the ship and the mooring station, wherein the frame is guidable by the conical receiver and the hook is movable within the conical receiver, since this provides the opportunity of a smooth mooring action. For example, if the conical receiver is located at the ship and the frame is movably mounted to the mooring station, the frame can be gradually guided into the conical receiver during a mooring action. In case of heave of the ship the frame can move together with the ship upon contacting the conical receiver. After mooring the bar and the hook may have well-defined locations with respect to each other; this facilitates easy engagement of the hook and the bar.

A resilient damper may be present between the frame and the other one of the ship and the mooring station in order to minimize the risk of damage when the frame and the conical receiver contact each other during a mooring action.

In practice the bar may extend substantially horizontally.

In a particular embodiment the hook is movable in horizontal direction through a first actuator being a linear actuator, wherein the hook is mounted to an extendable portion of the first actuator and the first actuator is mounted to one of the ship and the mooring station through a hook hinge having a pivot axis which extends in the same direction as the longitudinal direction of the bar when the hook and the bar are engaged to each other, wherein the first actuator is rotatable about the pivot axis through a second actuator which cooperates with the first actuator and the one of the ship and the mooring station. This appears to be a simple and functional structure, since the first actuator causes a horizontal movement of the hook and the second actuator causes a movement in transverse direction thereof, hence creating a movement to engage the hook to the bar.

The second actuator may also be a linear actuator, which is mounted to the one of the ship and the mooring station through a first pivot having a pivot axis which extends parallel to the pivot axis of the hook hinge, wherein an extendable portion of the second actuator is mounted to the extendable portion of the first actuator through a second pivot having a pivot axis which extends parallel to the pivot axis of the first pivot such that the pivot axes of the hook hinge, the first pivot and the second pivot form corners of a triangle, wherein both actuators operate along lines which have parallel components. This creates a compact structure in a direction perpendicular to the lines along which the actuators operate. When the bar extends horizontally the hook hinge and the first pivot may be located above each other, hence forming the basis of the triangle whereas the second pivot is movable with respect to the basis by means of operating the first and second actuators.

In a particular embodiment the second actuator is a passive actuator in the form of a spring which is adapted such that in an extended condition of the first actuator the hook has a first horizontal position with respect to the one of the ship and the mooring station and a first angular position with respect to the pivot axis and in a retracted condition of the first actuator the hook has a second horizontal position with respect to the one of the ship and the mooring station and a second angular position with respect to the pivot axis, wherein the first and second horizontal positions are different and the first and second angular positions are different. In this case only one active actuator is necessary which minimizes the risk of malfunctions. The movement of the first actuator causes the spring to exert a force on the extendable portion of the first actuator such that the first actuator rotates about the pivot axis of the hook hinge, which means that the hook moves in horizontal direction and in rotational direction about the pivot axis of the hook hinge. The spring may be a gas spring.

In the extended condition of the first actuator the spring force of the spring on the first actuator may be smaller than in the retracted condition of the first actuator.

The first actuator and the spring may have maximum extensions which are selected such that when extending the first actuator and the spring together the first actuator achieves its maximum extension later than the spring. In this way the first actuator will rotate the hook about the pivot axis when it still extends after the spring has reached its maximum extension. This provides the opportunity to rotate the hook away from a position where it meets the bar in an engaged condition.

Both actuators may operate along lines which intersect or cross each other beyond the second pivot as seen from the hook hinge and the first pivot. This facilitates the operation of the pulling device. It is noted that during operating the pulling device the location of intersection displaces.

In a preferred embodiment the hook is mounted to the ship and the bar is mounted to the mooring station, since the simplest part, i.e. the bar, is located at the mooring station. The hook must be controlled and requires a control system, which increases the risk of malfunctions. If the control system malfunctions at one ship, the ship can be repaired, but if the control system was located at the mooring station, the mooring station would be out of order for different ships.

The invention will hereafter be elucidated with reference to very schematic drawings showing an embodiment of the invention by way of example.
Fig. 1 is a perspective view of an embodiment of a system according to the invention.
Fig. 2 is a similar view as Fig. 1, but seen from a different side.
Fig. 3 is a similar view as Fig. 2, but showing a part of the embodiment of the system on a larger scale.
Fig. 4 is a perspective sectional view of the part as shown in Fig. 3.
Fig. 5 is a perspective cut-away view of the part as shown in Fig. 3.
Fig. 6 is a similar view as Fig. 2, but showing a part of the embodiment of the system on a larger scale.
Fig. 7 is a similar view as Fig. 6, but seen from a different side.
Fig. 8 is a similar view as Fig. 2, but showing a part of the embodiment of the system on a larger scale.
Figs. 9-11 are sectional views of a part of the pulling device of the embodiment as shown in Fig. 1, illustrating different conditions of a pulling device.
Fig. 12 is a similar view as Fig. 2, but illustrating charging means.
Fig. 13 is a similar view as Fig. 11, but illustrating the charging means as shown in Fig. 12.

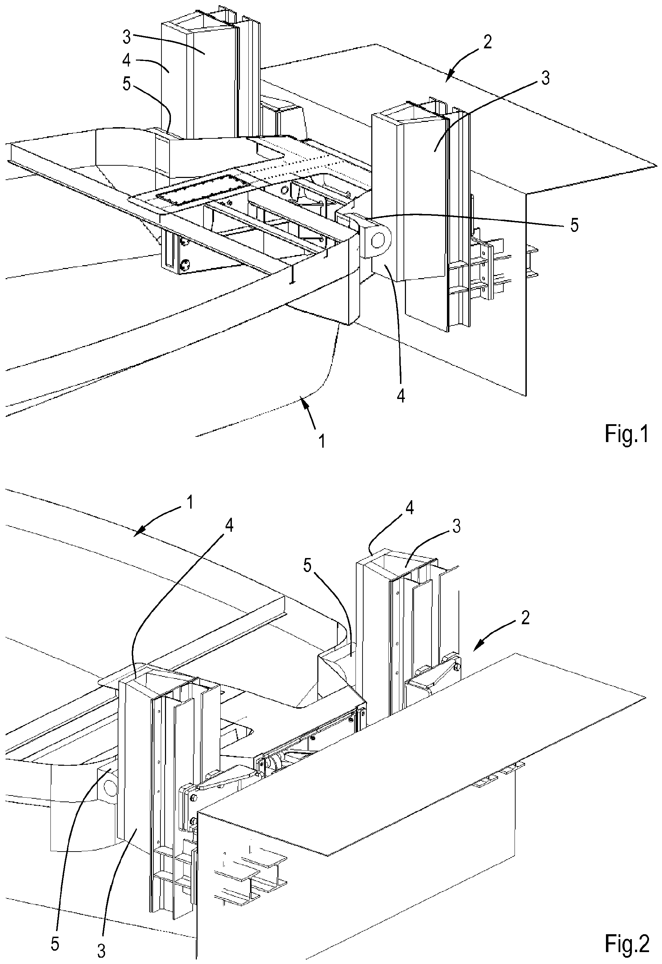

Figs. 1 and 2 show a front portion of an electrically driven ship 1, which is moored at a mooring station 2 that is fixed to a quay. The ship 1 is provided with a battery (not shown) for providing electrical energy to an electric motor which drives a propeller (not shown). The battery is electrically connected to electrical contact locations which are located at the front portion of the ship 1.

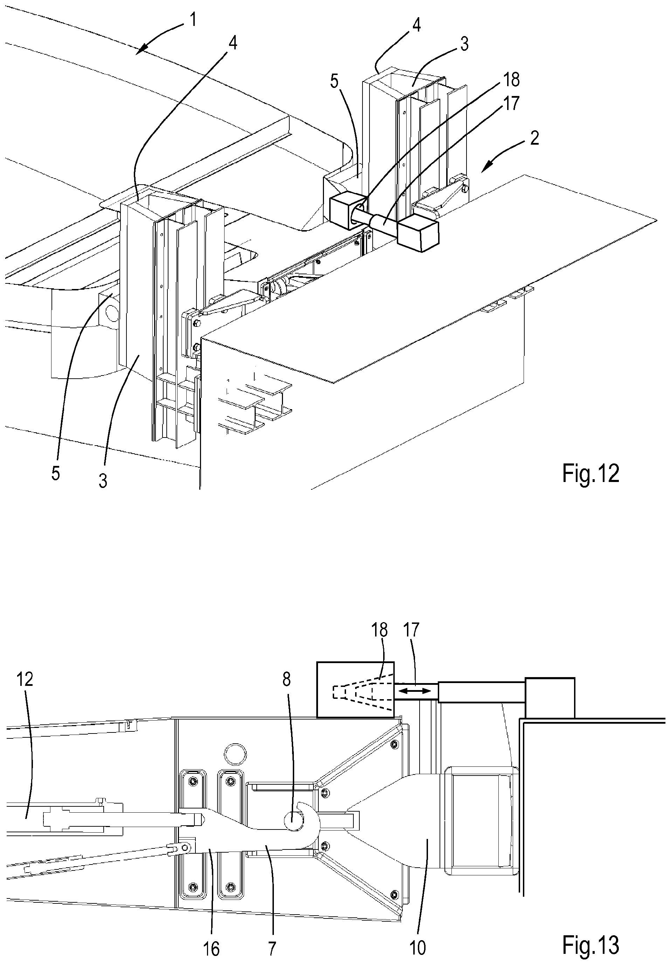

The mooring station 2 has an electrical source which is electrically connected to a charging plug 17, see Figs. 12 and 13. The charging plug 17 is provided with electrical contact locations which cooperate with the electrical contact locations at the ship 1. When the ship 1 is moored at the mooring station 2 the charging plug 17 can be inserted in a mating conical receiver 18 at the ship 1 such that the cooperating electrical contact locations are coupled to each other so as to transfer electrical energy from the electrical source at the mooring station 2 to the battery at the ship 1. The movement of the charging plug 17 is indicated by a double-headed arrow in Fig. 13.

The mooring station 2 comprises two vertical columns 3 which are located at a distance from each other. The columns 3 are provided with resilient fenders 4 at sides thereof which are directed away from the quay, i.e directed from the quay to the water. Sides of the fenders 4 which are directed to the water form respective contact surfaces or mechanical contact locations at the mooring station 2. The front side of the ship 1 has also two contact surfaces 5 or mechanical contact locations which are located at a distance from each other and which cooperate with the contact surfaces of the mooring station 2. When the ship 1 is moored at the mooring station 2 the contact surfaces 5 of the ship 1 and the fenders 4 of the mooring station 2 contact each other.

In practice, when the ship 1 approaches the mooring station 2 for docking and charging the battery it will be manoeuvred such that first one contact surface 5 of the ship 1 contacts the fender 4 of one of the columns 3 while maintaining propulsion force towards the mooring station 2 such that the ship 1 turns towards the other column 3 until the other contact surface 5 of the ship 1 contacts the fender 4 of the other column 3.

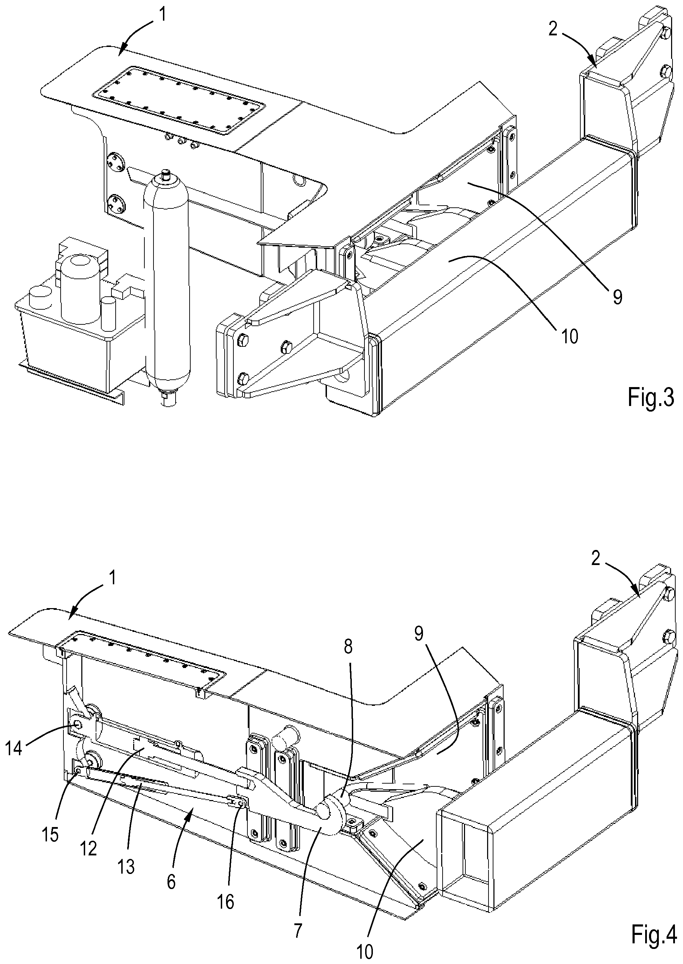

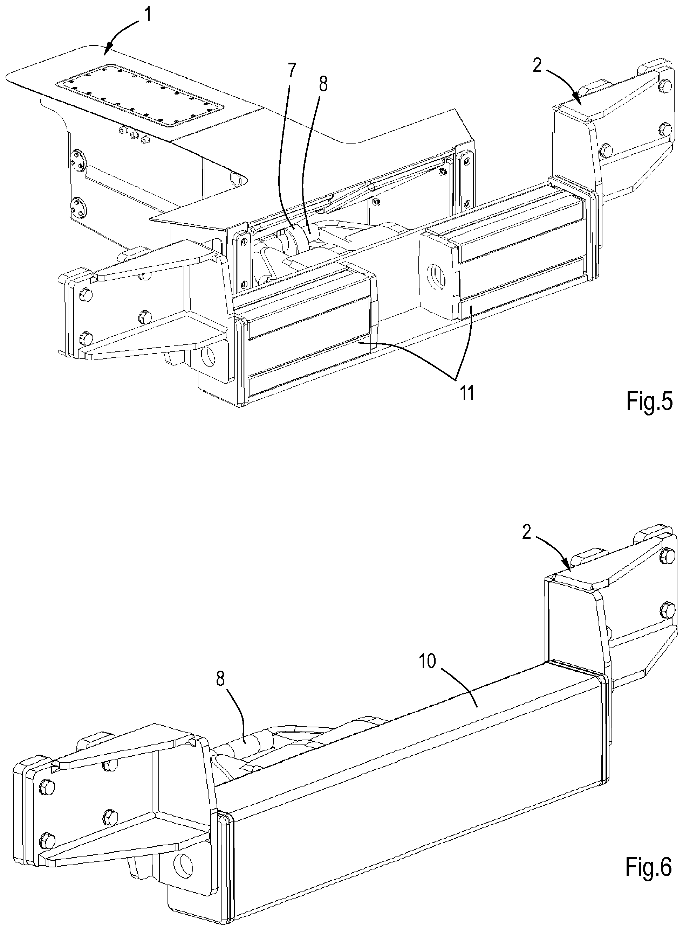

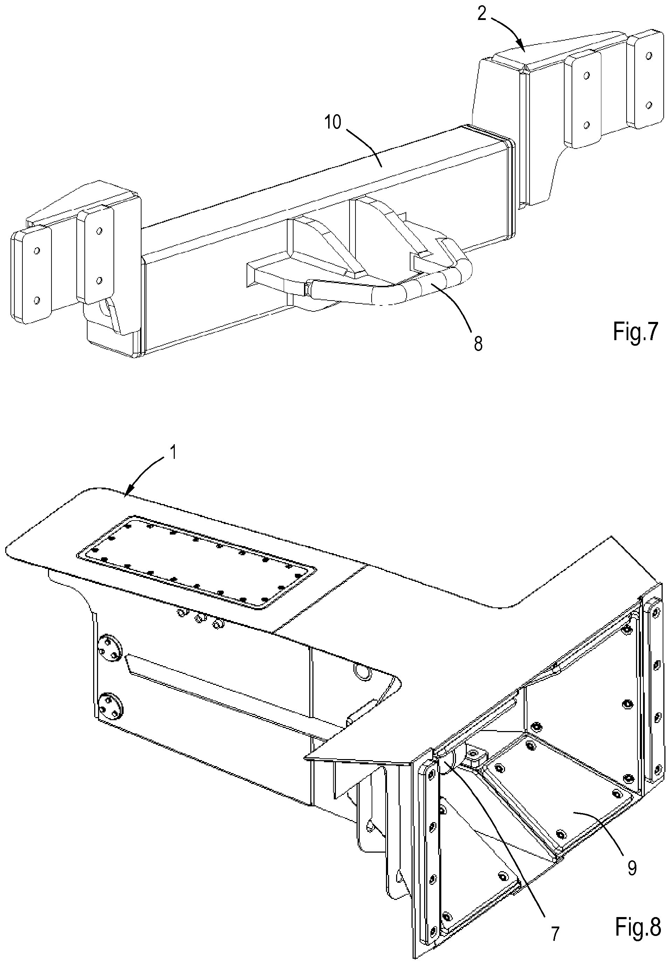

The ship 1 and the mooring station 2 form part of a system for charging the battery of the electrically driven ship 1 according to the invention, which system is also provided with a pulling device 6 for pulling the ship 1 and the mooring station 2 against each other when the ship 1 is moored at the mooring station 2. Figs. 3-11 show the pulling device 6 and its functioning in more detail. The columns 3 and a part of the ship 1 are not shown for explanatory reasons. The pulling device 6 comprises a hook 7 which is movably mounted to the ship 1 and a horizontal bar 8 which is mounted to the mooring station 2. The hook 7 and the bar 8 are engageable to each other. The hook 7 is located between the contact surfaces 5 of the ship 1 and the bar 8 is located between the columns 3 of the mooring station 2. The front side of the ship 1 is provided with a conical receiver 9 for receiving the bar 8.

The bar 8 is fixed to a frame 10 which is movably mounted to the mooring station 2. A portion of the frame 10 is shaped such that it is guidable by the conical receiver 9. Hence, during a mooring action the bar 8 is centrally inserted into the conical receiver 9, see Fig. 4. The frame 10 is movably mounted to the mooring station 2 through a resilient damper 11 in order to smoothen force peaks of the ship 1 on the mooring station 2 when the receiver 9 hits the frame 10, caused by heave of the ship 1 during a mooring action. The resilient damper 11 comprises rubber elements which are provided such that the frame 10 can rotate with respect to the mooring station 2 about a horizontal axis.

The hook 7 is mounted to the ship 1 via a first actuator in the form of a hydraulic cylinder 12 and a second actuator in the form of a gas spring 13. An alternative first actuator is conceivable, for example a pneumatic cylinder or an electric actuator. An alternative spring is conceivable, as well. The hydraulic cylinder 12 is pivotally coupled to the ship 1 via a hook hinge 14 and the hook 7 is fixed to an extendable portion of the hydraulic cylinder 12. The gas spring 13 is pivotally coupled to the ship 1 through a first gas spring pivot 15 and an extendable portion of the gas spring 13 is pivotally mounted to the hook 7 through a second gas spring pivot 16. The hook hinge 14 and the first and second gas spring pivots 15, 16 have pivot axes which are parallel to each other and to the longitudinal direction of the bar 8 when the hook 7 and the bar 8 are engaged to each other. The pivot axes of the hook hinge 14, the first gas spring pivot 15 and the second gas spring pivot 16 form corners of a triangle. The hook hinge 14 and the first gas spring pivot 15 form a fixed basis of the triangle.

The hydraulic cylinder 12 is an active actuator for moving the hook 7 in horizontal direction with respect to the ship 1, whereas the gas spring 13 is a passive actuator for pivoting the hydraulic cylinder 12 including the hook 7 about the hook hinge 14 upon moving the hook 7 in horizontal direction within a predefined range of displacement. Both actuators 12, 13 have a horizontal orientation and the hydraulic cylinder 12 is located above the gas spring 13 in this embodiment. The hydraulic cylinder 12 and the gas spring 12 operate along lines which intersect or cross each other beyond the second gas spring pivot 16 as seen from the hook hinge 14 and the first gas spring pivot 15.

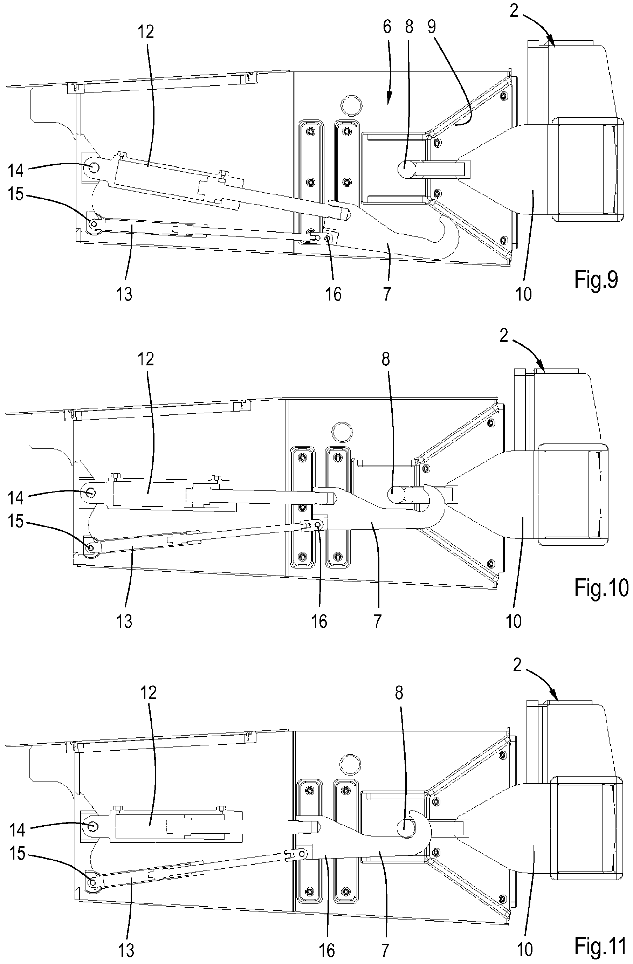

The gas spring 13 is adapted such that in an extended condition of the hydraulic cylinder 12 the hook 7 has a first horizontal position and a first angular position with respect to the ship 1, as shown in Fig. 9. When extending the hydraulic cylinder 12 and the gas spring 13 the hydraulic cylinder 12 achieves its maximum extension later than the gas spring 13. For that reason the hook 7 is oriented downwardly at the maximum extension of the hydraulic cylinder 12 as shown in Fig. 9. In this condition the hook 7 is at a low position with respect to the ship 1 and located outside the conical receiver 9. This avoids the hook 7 from colliding against the bar 8 during a mooring action. When the hydraulic cylinder 12 is moved from its extended condition to its retracted condition the hook 7 moves to a second horizontal position and a second angular position with respect to the ship 1, see Fig. 10. During this motion the hook 7 moves upwardly through an aperture in the conical receiver 9 into the inner space of the conical receiver 9. The upward motion of the hook 7 is caused by the gas spring 13 which exerts a counter force onto the hook 7 when the hydraulic cylinder 12 is moved from its extended condition to its retracted condition. When further moving the hydraulic cylinder 12 to its retracted condition the hook 7 moves to a third horizontal position whereas the angular position remains more or less the same since un upward motion of the hook 7 is blocked by the bar 8, see Fig. 11. In the condition as shown in Fig. 11 the hook 7 engages the bar 8 and the hydraulic cylinder 12 can be operated to pull the ship 1 against the columns 3 of the mooring station 2. It is noted that in the extended condition of the hydraulic cylinder 12 the spring force of the gas spring 13 on the hook 7 is smaller than in the retracted condition of the hydraulic cylinder 12.

The invention is not limited to the embodiments shown in the drawings and described hereinbefore, which may be varied in different manners within the scope of the claims and their technical equivalents.

Furthermore, an other aspect of the invention is related to a system for pulling a ship and a mooring station against each other, comprising a ship, a mooring station and cooperating mechanical contact locations at the ship and the mooring station which contact each other when the ship is moored at the mooring station, wherein the system comprises a pulling device for pulling the ship and the mooring station against each other when the ship is moored at the mooring station, wherein the pulling device has cooperating parts at the ship and the mooring station which are located at a distance from the mechanical contact locations. Such a system is not necessarily related to an electrically driven ship and a mooring station including a charging system for charging a battery of the ship. Particular embodiments of this system are defined in the claims 2-13.

## Claims

1. A system for charging a battery of an electrically driven ship (1), comprising a ship (1) including a battery for providing electrical energy to a propulsion device of the ship (1), a mooring station (2) including an electrical source, cooperating electrical contact locations at the ship (1) and the electrical source for transferring electrical energy from the electrical source to the battery when the electrical contact locations contact each other, cooperating mechanical contact locations (4, 5) at the ship (1) and the mooring station (2) which contact each other when the ship (1) is moored at the mooring station (2), **characterized in that** the system comprises a pulling device (6) for pulling the ship (1) and the mooring station (2) against each other when the ship (1) is moored at the mooring station (2), wherein the pulling device (6) has cooperating parts (7, 8) at the ship (1) and the mooring station (2) which are located at a distance from the mechanical contact locations (4, 5).

2. A system according to claim 1, wherein the cooperating mechanical contact locations comprise two contact surfaces (5) at the ship (1) which lie at a distance from each other as seen from above and two contact surfaces (4) at the mooring station (2) which cooperate with the respective contact surfaces (5) at the ship (1), wherein the cooperating parts (7, 8) of the pulling device (6) are located between the contact surfaces (5) of the ship (1) and between the contact surfaces (4) of the mooring station (2).

3. A system according to claim 1 or 2, wherein the cooperating parts of the pulling device comprise a hook (7) which is movably mounted to one of the ship (1) and the mooring station (2), and a bar (8) which is mounted to the other one of the ship (1) and the mooring station (2), wherein the hook (7) and the bar (8) are engageable to each other.

4. A system according to claim 3, wherein said one of the ship (1) and the mooring station (2) has a conical receiver (9) for receiving the bar (8) upon mooring, whereas the bar (8) is fixed to a frame (10) which is movably mounted to the other one of the ship (1) and the mooring station (2), wherein the frame (10) is guidable by the conical receiver (9) and the hook (7) is movable within the conical receiver (9).

5. A system according to claim 4, wherein a resilient damper (11) is present between the frame (10) and the other one of the ship (1) and the mooring station (2).

6. A system according to one of the claims 3-5, wherein the bar (8) extends substantially horizontally.

7. A system according to any one of the preceding claims and claim 3, wherein the hook (7) is movable in horizontal direction through a first actuator (12) being a linear actuator, wherein the hook (7) is mounted to an extendable portion of the first actuator (12) and the first actuator (12) is mounted to one of the ship (1) and the mooring station (2) through a hook hinge (14) having a pivot axis which extends in the same direction as the longitudinal direction of the bar (8) when the hook (7) and the bar (8) are engaged to each other, wherein the first actuator (12) is rotatable about the pivot axis through a second actuator (13) which cooperates with the first actuator (12) and said one of the ship (1) and the mooring station (2).

8. A system according to claim 7, wherein the second actuator (13) is also a linear actuator which is mounted to said one of the ship (1) and the mooring station (2) through a first pivot (15) having a pivot axis which extends parallel to the pivot axis of the hook hinge (14), wherein an extendable portion of the second actuator (13) is mounted to the extendable portion of the first actuator (12) through a second pivot (16) having a pivot axis which extends parallel to the pivot axis of the first pivot (15) such that the pivot axes of the hook hinge (14), the first pivot (15) and the second pivot (16) form corners of a triangle, wherein both actuators (12, 13) operate along lines which have parallel components.

9. A system according to claim 8, wherein the second actuator is a passive actuator in the form of a spring (13) which is adapted such that in an extended condition of the first actuator (12) the hook (7) has a first horizontal position with respect to said one of the ship (1) and the mooring station (2) and a first angular position with respect to the pivot axis and in a retracted condition of the first actuator (12) the hook (7) has a second horizontal position with respect to said one of the ship (1) and the mooring station (2) and a second angular position with respect to the pivot axis, wherein the first and second horizontal positions are different and the first and second angular positions are different.

10. A system according to claim 9, wherein in the extended condition of the first actuator (12) the spring force of the spring (13) on the first actuator (12) is smaller than in the retracted condition of the first actuator (12).

11. A system according to claim 9 or 10, wherein the first actuator (12) and the spring (13) have maximum extensions which are selected such that when extending the first actuator (12) and the spring (13) together the first actuator (12) achieves its maximum extension later than the spring (13).

12. A system according to any one of the claim 8-11, wherein both actuators (12, 13) operate along lines which intersect or cross each other beyond the second pivot (16) as seen from the hook hinge (14) and the first pivot (15).

13. A system according to any one of the claim 9-12, wherein the spring is a gas spring (13).

14. A system according to one of the claims 3-13, wherein the hook (7) is mounted to the ship (1) and the bar (8) is mounted to the mooring station (2).
